(19) Europäisches Patentamt / European Patent Office / Office européen des brevets

(11) **EP 3 292 899 A1**

(12) **EUROPEAN PATENT APPLICATION**

(43) Date of publication:
14.03.2018 Bulletin 2018/11

(51) Int Cl.:
*B01D 17/02* (2006.01) *C02F 1/28* (2006.01)
*C08J 9/00* (2006.01)

(21) Application number: 17193276.7

(22) Date of filing: 28.02.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 29.02.2012 US 201261604798 P

(62) Document number(s) of the earlier application(s) in accordance with Art. 76 EPC:
13712397.2 / 2 819 758

(71) Applicant: **Opflex Technologies, LLC**
**Indianapolis, IN 46225 (US)**

(72) Inventors:
• **Curtis, Thomas G.**
**Cataumet, MA 02534 (US)**
• **Smith, Scott C.**
**Osterville, MA 02655 (US)**

(74) Representative: **Durm Patentanwälte PartG mbB Patentanwälte**
**Moltkestrasse 45**
**76133 Karlsruhe (DE)**

Remarks:
This application was filed on 26-09-2017 as a divisional application to the application mentioned under INID code 62.

(54) **APPARATUS AND METHODS FOR REMOVING CONTAMINANTS FROM A LIQUID**

(57) The invention relates to a composition for removing and/or recovering oil from land or water, comprising a polymer defining an open-cell foam and including ethylene methyl acrylate (EMA) copolymer, the EMA copolymer having a methyl acrylate content from about 3% to about 45% based on the total weight of copolymer, the polymer includes 100% EMA copolymer, and the polymer has a melt index (MI) from about 0.5 g/10 minutes to about 5 g/10 minutes. The invention further relates to an apparatus and a method for removing a contaminant from a liquid.

FIG. 1

EP 3 292 899 A1

FIG. 9

## Description

<u>Cross-Reference to Related Application</u>

This application claims priority to and the benefit of, and incorporates herein by reference in its entirety, U.S. Provisional Patent Application No. 61/604,798, which was filed on February 29, 2012.

<u>Technical Field</u>

In various embodiments, the invention relates to apparatus and methods for removing contaminants from a liquid and, more particularly, to an open cell foam structure for adsorbing oil from bodies of water and other polar liquids.

<u>Background</u>

Recent releases of crude oil into the environment have accelerated the investigation of methods and materials suitable for removal and/or recovery of oil and oleophilic materials from the environment, especially bodies of water. As exploration of the sea bottom and transportation of oil over water increase, the need for effective technologies for oil removal becomes more immediate.

Floating containment booms have been used for decades as temporary barriers against oil on the surface of the water. To protect long stretches of coast, long lengths of boom are assembled from many short lengths connected end to end. Moorings with numerous light anchors hold the booms in position. Each anchor rode includes a short length of chain and line to a buoy and floating boom.

Conventional containment booms are problematic and ineffective in any but the mildest sea states (e.g., wave heights < 0.5 m) and wind speeds (e.g. , < 3.4 m/s). The booms have limited freeboard and draft, which allows oil to flow over and under the booms by wave action and/or currents. The booms are also generally unable to withstand mechanical stresses caused by wave action, and mechanical failures are common. Conventional booms also tend to absorb water and sink.

Floating sorbent booms, made of oleophilic materials, were created to "mop up" oil for removal from a water surface. Oil adheres readily to such materials, being adsorbed on their surfaces. Crude oil, consisting primarily of ensembles of nonpolar alkane and cycloalkane hydrocarbon molecules, adheres to petroleum based sorbents, such as polypropylene, by weak van der Waals forces if in close proximity to the surface. Most sorbent booms, being made of closed-cell foam, adsorb oil only on the outer surface. In previous spills, a large quantity of sorbent booms have been deployed, recovered, and discarded in landfills. This process is inefficient and costly because boom surface is relatively small and booms are not reused. Furthermore, conventional sorbent booms do not adsorb lighter oils such as kerosene, diesel, and gasoline.

There is a need for improved apparatus and methods for removing contaminants, such as oil, from a body of water. In particular, needs exist for apparatus that prevent oil and/or other nonpolar contaminants from flowing over or under the apparatus, withstand mechanical stresses due to wave or wind action, adsorb large quantities of contaminants, and may be cleaned and reused repeatedly.

<u>Summary of the Invention</u>

Embodiments of the invention include a new adsorbent material and apparatus to recover spilled oil and other contaminants. Made of a copolymer of ethylene alkyl acrylate (e.g., ethylene methyl acrylate (EMA)), which is hydrophobic and oleophilic, the apparatus includes long filaments or strips of buoyant, open-cell foam, on which oil is adsorbed. The filaments are closely spaced along a demersal, "tension element" anchored at both ends and deployed just offshore of a coast to be protected. With a filament length greater than the water depth, the filaments rise to the surface and float down wind, or down current. Submerged oil moving toward the coast is interdicted by the filaments rising from the anchoring tension element. Surface oil that may otherwise be advected over a conventional floating boom is adsorbed onto the filaments floating on the surface. In rough seas, wave induced motions of conventional floating booms can result in snap loads, which are often destructive. In such seas that would destroy conventional floating booms, embodiments of the apparatus described herein, which are flexible and durable, would not be damaged due to the ability of the filaments to move and deform independently, thereby preventing the development of large snap loads.

In one aspect, embodiments of the invention relate to an apparatus for removing a contaminant from a liquid. The apparatus includes a tension element extending along a length of the liquid and proximate a bottom thereof. The apparatus also has a plurality of buoyant strips attached to the tension element and extending to a surface of the liquid, at least a portion of which float on the surface. The strips include a polymer (e.g., an ethylene alkyl acrylate copolymer) defining an open cell foam having an average cell size greater than 1.4 mm and/or a ratio of open cells to closed cells greater than 1:1.

In one embodiment of the above aspect, the ethylene alkyl acrylate is ethylene methyl acrylate. The polymer may be at least 80% ethylene alkyl acrylate, by weight. The polymer may be low density polyethylene. The foam may have a tensile strength greater than approximately 14 psi, and may have a tensile strength greater than about 16 psi. In certain embodiments, the foam has a density greater than about 1 lb/ft$^3$, and may have a density greater than about 2 lb/ft$^3$. In some embodiments the contaminant is a petroleum product. In one embodiment, the contaminant is a nonpolar species.

In another aspect, embodiments of the invention relate to a method of removing a contaminant from a liquid. The method includes placing a tension element along a length of a 15 bottom of the liquid and attaching a plurality of buoyant strips to the tension element, such that the strips extend to a surface of the liquid with at least a portion of the strips floating on the surface. The method also includes exposing the strips to the contaminant in the liquid, wherein the strips are a polymer (e.g., ethylene alkyl acrylate copolymer) defining an open cell foam having an average cell size greater than 1.4 mm and/or a ratio of open cells to closed cells greater than 1:1.

In one embodiment of the above aspect, the ethylene alkyl acrylate is ethylene methyl acrylate. The polymer may be at least 80% ethylene alkyl acrylate, by weight. The polymer may be low density polyethylene. The foam may have a tensile strength greater than about 14 psi, and may have a tensile strength greater than about 16 psi. In certain embodiments, the foam has a density greater than about 1 lb/ft$^3$, and may have a density greater than about 2 lb/ft$^3$. In some embodiments the contaminant is a petroleum product, and in some embodiments the contaminant is a nonpolar species. The method may include adsorbing the contaminant onto the strips, and may further include removing the strips from the liquid and extracting the contaminant from the strips by mechanical action. In certain embodiments, the method includes redeploying the strips into the liquid for further contaminant removal.

In still another aspect, embodiments of the invention relate to a method of manufacturing a contaminant removal apparatus. The method includes mixing a polymer (e.g., ethylene alkyl acrylate copolymer) with a foaming agent to produce an open cell foam sheet and introducing a plurality of substantially parallel slits in the foam sheet. The slits originate at a base portion of the foam sheet and extend to an opposite edge of the foam sheet to define a plurality of strips attached to the base portion. The method also includes attaching the base portion to a tension element. The foam has an average cell size greater than 1.4 mm and/or a ratio of open cells to closed cells greater than 1:1.

In one embodiment of the above aspect, the ethylene alkyl acrylate is ethylene methyl acrylate. In another embodiment, the polymer is at least 80% ethylene alkyl acrylate, by weight. In other embodiments, the foam has a tensile strength greater than about 14 psi, 10 may have a tensile strength greater than about 16 psi. In certain embodiments, the foam has a density greater than about 1 lb/ft$^3$, and may have a density greater than about 2 lb/ft$^3$. The mixing may occur in an extruder. The contaminant may be a petroleum product, and the contaminant may be a nonpolar species. The contaminant may include a petroleum product.

In another aspect, embodiments of the invention relate to a composition having a polymer (e.g., ethylene alkyl acrylate copolymer) defining an open cell foam having an average cell size greater than 1.4 mm and/or a ratio of open cells to closed cells greater than 1:1.

These and other objects, along with advantages and features of embodiments of the present invention herein disclosed, will become more apparent through reference to the following description, the figures, and the claims. Furthermore, it is to be understood that the features of the various embodiments described herein are not mutually exclusive and can exist in various combinations and permutations.

Brief Description of the Drawings

In the drawings, like reference characters generally refer to the same parts throughout the different views. Also, the drawings are not necessarily to scale, emphasis instead generally being placed upon illustrating the principles of the invention. In the following description, various embodiments of the present invention are described with reference to the following drawings, in which:

FIG. 1 is a schematic representation of the chemical structure of ethylene methyl acrylate copolymer, in accordance with an illustrative embodiment of the invention;
FIG. 2 is a flowchart of a method of manufacturing a foam composition, in 30 accordance with an illustrative embodiment of the invention;
FIG. 3 is a photograph of a device for removing oil from a foam material, in accordance with an illustrative embodiment of the invention;
FIG. 4 is a schematic, side view of an apparatus for recovering oil from a body of water, in accordance with an illustrative embodiment of the invention;
FIG. 5 is a schematic, top view of an installation of the apparatus of FIG. 6, in accordance with an illustrative embodiment of the invention;

FIG. 6 is a schematic, perspective view of a foam sheet having a plurality of slits, in accordance with an illustrative embodiment of the invention;

FIG. 7, is a schematic, end view of the foam sheet of FIG. 8 attached to a tension element, in accordance with an illustrative embodiment of the invention;

FIG. 8 is a schematic, perspective view of the foam sheet of FIG. 8 attached to a tension element, in accordance with an illustrative embodiment of the invention; and

FIG. 9 is a schematic, top view of an apparatus for recovering oil from a body of water, in accordance with an illustrative embodiment of the invention.

Description

It is contemplated that apparatus, systems, methods, and processes of the claimed invention encompass variations and adaptations developed using information from the embodiments described herein. Adaptation and/or modification of the apparatus, systems, methods, and processes described herein may be performed by those of ordinary skill in the relevant art.

Throughout the description, where apparatus and systems are described as having, including, or comprising specific components, or where processes and methods are described as having, including, or comprising specific steps, it is contemplated that, additionally, there are apparatus and systems of the present invention that consist essentially of, or consist of, the recited components, and that there are processes and methods according to the present invention that consist essentially of, or consist of, the recited processing steps.

It should be understood that the order of steps or order for performing certain actions is immaterial so long as the invention remains operable. Moreover, two or more steps or actions may be conducted simultaneously.

Polymer compositions for use in the removal and recovery of oil slicks or spills are described in U.S. Patent Application No. 12/886,195, filed September 20, 2010, and titled "Foam Compositions for Selective Recovery of Oil Spills and Other Applications," the entire disclosure of which is incorporated by reference herein in its entirety.

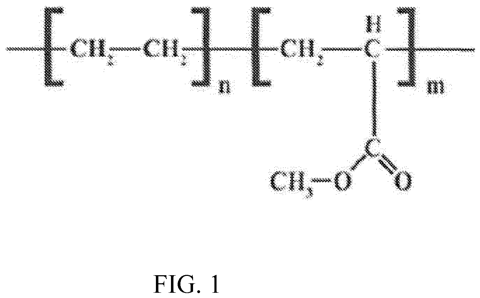

In various embodiments, a composition is provided for removing and/or recovering oil from land or water. The composition includes a polymer defining an open-cell foam. The polymer includes, consists essentially of, or consists of an ethylene alkyl acrylate copolymer, such as ethylene methyl acrylate (EMA) copolymer, ethylene ethyl acrylate copolymer, or mixtures thereof. In a preferred embodiment, the polymer is 100% EMA copolymer, the structure of which is shown in FIG. 1. The copolymer may have an alkyl acrylate content from about 3% to about 45%, or from about 15% to about 25%, based on the total weight of copolymer. A melt index (MI) for the polymer may be from about 0.5 g/10 minutes to about 5 g/10 minutes. The polymer may or may not be cross-linked. In some embodiments, the polymer is blended with one or more other plastics (e.g., low density polyethylene) and/or elastomers.

In certain embodiments, the composition also includes a cross-linker, such as an organic peroxide. Suitable organic peroxide cross-linkers may include, for example, dicumyl peroxide, 2,5-dimethyl-2,5-di(t-butylperoxy) hexane, 1,1-bis(t-butylperoxy)-3,3,5-trimethylcyclohexane,1,1-di-(t-butylperoxy)c- yclohexane, 2,2'-bis(t-butylperoxy)-diisopropylbenzene,4,4'-bis(t-butylperoxy)butylva- lerate, t-butylperbenzoate, t-butylpaterephthalate, and t-butyl peroxide. Most preferably, the peroxide cross-linking agent is dicumyl peroxide or 2,2'-bis(t-butylperoxy)diisopropylbenzene. In some embodiments, the cross-linker includes one or more organic peroxides, silanes, vinyl monomers, organo-titanates, organo-zirconates, and/or p-quinone dioximes. Alternatively or additionally, the foam and/or the polymer may be crosslinked via irradiation.

The cross-linked polymer may or may not be grafted. In general, grafting involves attaching monomer(s) or polymer(s) to the original polymer resin chains. The grafting is generally accomplished by forming active grafting sites on the original polymer chains in the presence of monomers that can further polymerize as branches from the original polymer chains. Acting grafting sites can be generated, for example, by free radicals or anions. A graft can include other monomers, such as di and tri-allyl cyanurates and isocyanurates, alkyl di- and tri-acrylates and methacrylates, zinc dimethacrylates and diacrylates, styrenes, divinylbenzene, vinyl silanes with at least two hydrolysable groups, and butadiene. Silane-grafted polymer blends can be cross-linked by reaction with moisture. The polymer blend may also be grafted with maleic anhydride to modify the absorption properties.

In an embodiment, chemical foaming agents may be included in the formulation. Chemical foaming agents may include, for example, azodicarbonamide, p-p'-oxybis(benzene)sulfonyl hydrazide, p-toluenesulfonyl semicarbazide, 5-plienyltetrazole, ethyl-5-phenyltetrazole, dinitrosopentamethylenetetramine, and other azo, N-nitroso, semicarbazide, sulfonyl hydrazides, carbonate, and bicarbonate compounds that decompose to form a gas when heated. The preferred foaming agents are chemical foaming agents, such as azodicarbonamide. Maleic anhydride can be added to the blend to increase the polarity of the blend composition to further improve oil adsorption. Alternatively or additionally, the foam may be produced with physical blowing agents, such as isobutane.

In various embodiments, the composition includes one or more additives, which may include inert fillers such as calcium carbonate, talc, zinc oxide, or the like. These fillers may lower the ultimate elongation of the foam walls, yielding easier crushing tendency. Silicone oil also can be added to modify the integrity of the cell wall and to create an even cellular structure. In an embodiment, zinc stearate is included to act as a foaming agent activator. Stearic acid may be used as a releasing agent.

The composition may also include a biodegradable additive, such as SR2003 from Sierra Resins. In general, the biodegradable additive includes a biodegradation initiator that aids in the creation of enzymes that can digest the polymer. In one embodiment, the additive is Bio-Tec's ECOPURE®, which is a combination of organic compounds and nutrients that attract microorganisms that metabolize polymers.

In certain embodiments, the composition includes a biocide. The biocide may aid in the clean-up and treatment of algae, bacteria, and fungi in water or other environment. For example, the open cell foam with the biocide may be used to purify water. In various embodiments, the biocide may be quaternary ammonium compounds, hypochlorite, sodium dichloro-s-triazinetrione, trichloro-s-triazinetrione, hydantoin, zinc omadine, or mixtures thereof. The biocide may be incorporated into the formulation and be an integral part of the open-celled foam. Alternatively or additionally, the biocide may be adsorbed on the surface of the foam structure in a secondary step. One exemplary biocide is HM1400, available from BIOSAFE'®. HM4100 is a broad spectrum antimicrobial additive.

Other additives, alone or in combination, that may be added to the composition include antioxidants (e.g., hindered phenolics such as IRGANOX®' 1010, phosphates such as IRGAFOS® 168, or polymerized trimethyl-dihydroquinolines such as AGERITE AK, Resin D or FLECTOL H), ultra-violet stabilizers, thermal stabilizers, antistatic components, flame retardants, dyes, pigments or colorants, and other processing aids. In one embodiment, a green colorant is added to the foam composition. The green colorant may be, for example, phthalocyanine green. Organic or inorganic dyes or colorants may be used.

In various embodiments, the composition is or includes a high-density foam. The foam may have a density of, for example, at least about 2 lb/ft$^3$, at least about 3 lb/ft$^3$, or at least about 4 lb/ft$^3$. Compared to previous products for oil recovery, the higher foam density provides improved performance characteristics, including a higher tensile strength and improved durability. In one embodiment, the density of the foam is less than about 2 lb/ft$^3$, for example, from about 1 lb/ft$^3$ to about 2 lb/ft$^3$. An average density for the foam may be about 1.8 lb/ft$^3$. Higher tensile strength may be achieved through the use of 100% EMA as the polymer, rather than, for example, a blend of EMA with one or more other polymers. In some embodiments, the EMA includes about 20% methyl acrylate and about 80% ethylene for optimal properties, including tensile strength.

The composition may be formed into useful articles using a wide variety of manufacturing processes, including extrusion, molding, machining, and foaming. In some embodiments, the composition is formed into a solid substrate, a closed-cell foam, an open-cell foam, or a laminated combination of these forms. These varying forms enable optimization of material properties, such as density, buoyancy, tensile strength, durability, and modulus of elasticity.

The open-cell foam structure may be formed from, for example, a mixture of the polymer, a foaming agent, a cross-linker, and any desired additive, such as a biodegradation initiator or colorant. The mixture may be directed to a mold where the mixture is subjected to heat and pressure to initiate cross-linking. The mixture may then be directed to a second step expansion chamber where the mixture is steam heated and water cooled. In this step, the foaming agent decomposes into a gas to form cells, while cross-linking continues. The foam mixture is then cooled and removed for further processing. Next, the foam may be crushed or compressed to puncture its skin and open the cells. Alternatively or additionally, the foam may be punctured with needles to open the cells. In one embodiment, the foam is cut or punched to provide channels or holes that access surfaces of internal void space, to increase the surface area on which contaminants may be adsorbed. In various embodiments, the percentage of cells in the foam that are open may be from about 20% to about 100%, or from about 75% to about 90%. For example, the percentage of cells that are open may be greater than about 20%, greater than about 40%, greater than about 60%, greater than about 80%, or greater than about 90%. An average cell size (e.g., cell diameter) for the foam may be, for example, from about 0.2 mm to about 10 mm, from about 1.4 mm to about 5 mm, or preferably about 2 mm. This open-cell configuration has been observed to achieve optimal adsorption of oil and other contaminants. For lighter oils such as kerosene, diesel, and gasoline, it is presently found that cell size ranges from about 0.5 mm to about 1.5 mm are most effective. For heavier, more viscous oils, it is presently found that cell sizes greater than about 1.5 mm are most effective. In one embodiment, use of 100% EMA as the polymer (e.g., rather than a blend of EMA and another polymer, such as polyethylene) allows the cell size to be increased. Minimum, maximum, and typical values for the foam properties are presented in Table 1, below.

Table 1. Exemplary system parameters.

| Parameter | Min. | Typical | Max. |
|---|---|---|---|
| Molar Ratio of Ethylene to Methyl Acrylate in EMA | 1:5 | 1:1 | 5: 1 |
| Fraction of Cells That Are Open | 0.5 | 0.9 | 1 |
| Average Cell Diameter (mm) | 0.5 | 2.5 | 5 |

(continued)

| Parameter | Min. | Typical | Max. |
|---|---|---|---|
| Longline Separation Distance (m) | 1 | 3 | 10 |
| Weight Percent Alkyl Acrylate in Copolymer | 3 | 20 | 45 |
| Melt index of polymer (g/10 minutes) | 0.5 | 2 | 4 |
| Ratio of Open Cell Volume to Closed Cell Volume | 1:1 | 10: 1 | 20:1 |
| Saturation Limit, $L_s$ | 0.5 | 0.90 | 0.97 |
| Foam Density (lb/ft$^3$) | 1 | 1.8 | 6 |
| Foam Tensile Strength (psi) | 12 | 18 | 40 |
| Foam Elongation (%) | 100 | 280 | 400 |
| Foam Compression Resistance 25% (psi) | 0.1 | 0.3 | 0.6 |
| Foam Compression Resistance 50% (psi) | 0.4 | 0.6 | 1.2 |
| Foam Compression Set (%) | <3 | <5 | <14 |
| Foam Tear Resistance (pli) | 2 | 5 | 10 |
| Filament Length (feet) | 2 | 10 | 20 |
| Filament Width (inches) | 0.5 | 2 | 6 |
| Filament Thickness (inches) | 0.125 | 0.5 | 2 |

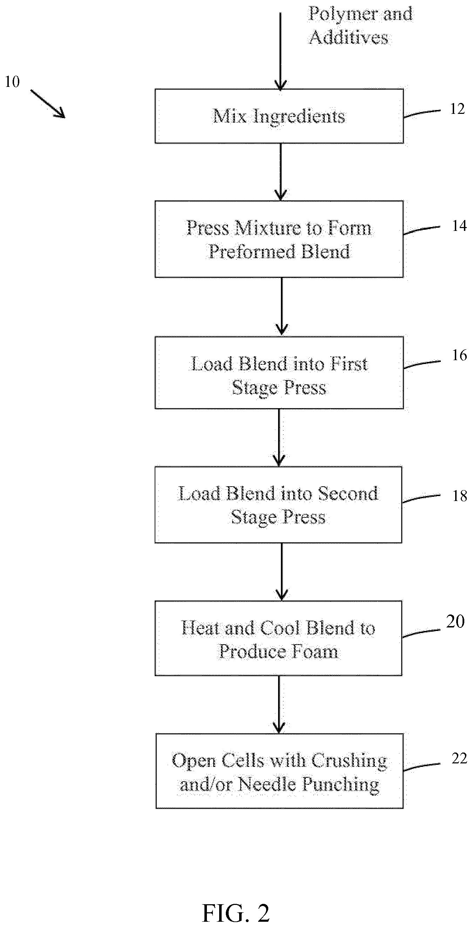

Referring to FIG. 2, in certain embodiments, the open-cell foam material is manufactured in a multi-step process 10. The polymer and any desired additives, including the foaming agent and cross-linker) are mixed (step 12) in a mixing apparatus, such as a dispersion mixer at a temperature below the decomposition temperatures of both the foaming agent and cross-linker. The mixture is then pressed (step 14) in an apparatus (e.g., a two roll mill) to further mix the mixture and remove entrained air, to produce a preformed blend suitable for subsequent processing. Alternatively, the mixture may be processed in an extruder to complete mixing, remove entrained air, and produce a preformed blend suitable for subsequent processing.

The resultant blend may then be divided into sections of predetermined weight and preformed in shape using a low pressure press apparatus. This step may not be performed in the case of an extruded blend, where the blend is cut to predetermined weight as it exits the extruder. The blend should have a volume sufficient to accommodate subsequent processing apparatus.

Preformed volumes of the resultant polymeric compositions, referred to in the art as "shots," are next loaded (step 16) into a first stage high pressure apparatus such as a press, where they are subjected to heat and pressure, and the cross-linking is initiated. Foaming may not occur in this press. The shots are removed from the first stage press and placed in a second stage press (step 18), which may be steam heated and water cooled (step 20). Heating can be controlled by accurate steam pressure control and equal distribution throughout the surface of the platens in the box. Cooling can be controlled by high coolant flow and equal distribution of coolant throughout the platen surfaces.

The second stage press preferably contains one or more cavities, each of which is essentially a box that is steam heated, water cooled, and defines a volume that is larger than a corresponding shot placed within the box. The steam heat continues the cross-linking reaction and decomposes the chemical foaming agent to form a gas, causing the shot to expand to the limits of the box. The steam is then shut off and the cooling water is introduced through the coils.

At the end of the cooling cycle, the completed polymeric foam products (i.e., "buns") are removed from the press for further processing. The foam structure at this point in the process includes predominantly closed cells. To open the cells, the buns may be crushed (step 22) by first puncturing a skin or outer surface of the buns by mechanical means, such as rollers, pins, or teeth. The buns are then compressed between pressure rollers continuously to break the cells within the buns. This opening of the cells promotes maximum oil adsorption capability of the polymeric foam product, since any closed cell precludes further adsorption of oil within the foam. It has been found that optional additional puncturing of the material using needle punching increases the ability of the foam to adsorb oil. The needle punching may be performed, for example, as part of the mechanical crushing with rollers, or the needle punching may be performed in a subsequent step. Further cutting into strips increases surface area and access to the cells, as well as improves the independent movement of the material in the seaway.

Materials for adsorbing oil and other contaminants should possess a wide variety of properties, including selective affinity for the contaminants, buoyancy, durability, potential for reuse, and ease of fabrication into useful structures. The foam compositions described herein possess each of these desirable properties.

For example, in various embodiments, the open-cell foam is capable of adsorbing a wide variety of contaminants from a body of water, including oil, fuels, lubricants, liquid hydrocarbons, crude oil, petroleum products, dispersants, detergents, petrochemical runoff from land, PCBs, greases, polycyclic aromatic hydrocarbons (PAH), and fatty acids. PAHs are lipophilic hydrocarbons that abound in crude oil, coal, edible oils, and/or combustion products. An example of a dispersant that may be adsorbed by the foam is COREXIT ®, available from Nalco. Chemicals with a nonpolar molecular structure, which may constitute significant pollution hazards, may be adsorbed onto surfaces of the foam. The foam may be deployed in any body of water, including oceans, rivers, streams, lakes, ponds, reservoirs, wastewater, mining pools, tailing ponds, hydro-fracturing water pools, swimming pools, and other bodies of polar liquids. The foam may also be used to recover contaminants from liquids other than water, such as alcohols, ketones, aldehydes, and carboxylic acids.

Without wishing to be bound by a particular theory, the open-cell foam may work as an adsorbent, such that contaminants are adhered to the polymer surfaces defining the cells of the foam. Due to the foam structure and surface chemistry, the foam may adsorb and retain the 30 contaminants even in strong currents and high winds. In general, the open-cell foam is capable of removing oil on and below the surface of water.

Unlike prior closed-cell foams used for oil recovery, the open-cell foams described herein are able to adsorb oil through a network of connected cells, deep within the foam structure. This allows the foam to collect considerably more oil than it could otherwise. The open-cell structure of the foam dramatically increases the surface area available for adsorption and allows oil to fill the open-cells, thereby removing much more oil and other contaminants than a closed-cell foam of similar composition. In some embodiments, the open-celled foam adsorbs up to about 33 times its weight, or more, in contaminants (e.g., hydrocarbons or petroleum products), without collecting substantial amounts of water.

In a closed-cell foam, the cells are each completely surrounded by solid material and not connected with one another. The internal cells may displace water and provide buoyancy, without adding weight of polymeric material that would otherwise occupy the cell volume. Unfortunately, however, the surfaces of the internal cells are not connected to the surface and are therefore unavailable for oil adsorption.

By comparison, in an open-cell foam, the cells are interconnected to form passages from an external surface of the foam to interior cells within the foam. The surface area of the interior cells is therefore available for oil adsorption, which significantly increases the oil adsorption capacity of the foam. In one embodiment, the interior cells and passages include dimensions (e.g., diameters) that are appropriate for the viscosity of the fluid being adsorbed. A ratio of an open cell volume $V_0$ to a closed cell volume $V_c$ (i.e., $V_0 : V_c$) for the foams described herein may be, for example, from about 1:1 to about 20:1, or about 4:1.

Due to the availability of open cells for oil adsorption, a floating sorbent boom made with an open-cell foam is generally much more effective than one made with a closedcell foam. A saturation limit $L_s$ is the fraction of a bulk volume $V/$, of the foam that could be fdled with oil, and is given by

$$L_S = \frac{V_o}{V_b}$$

In various embodiments, the open cell foam described herein includes a saturation limit $L_s$ from about 0.1 to about 0.6, from about 0.5 to about 0.8, or about 0.75. In one embodiment, the saturation limit $L_s$ is less than about 0.25. Testing has shown foamed EMA adsorbing 25 to 32 times its weight in oil and other contaminants.

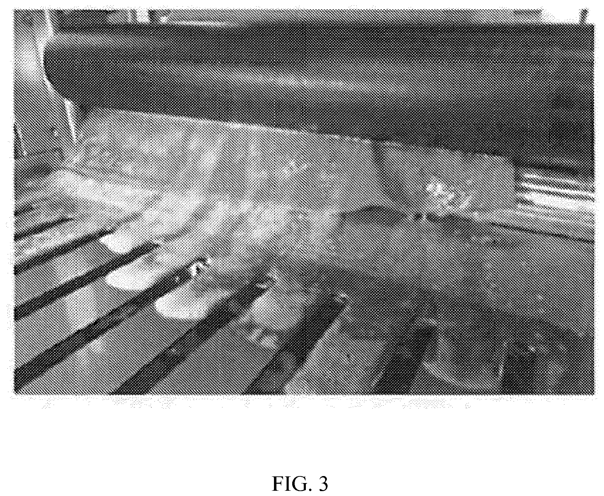

To maximize the ability of a foam to adsorb oil, it is generally desirable to 30 maximize the saturation limit $L_s$. When the saturation limit $L_s$ is reached, no additional surface area is available for adsorption, and any oil that comes into contact with the foam may remain in the water. At this point, the oil may be extracted from the foam, for example, by squeezing the foam, spinning the foam in a centrifuge, and/or by cleaning the foam with solvents or detergents. FIG. 3 depicts a method for squeezing oil from the foam that includes passing the foam through a nip formed between two rotating rollers. After the oil has been removed, the foam may be reused from about 20 to about 30 times, or up to about 100 times. In some embodiments, the size or number of open-cells increases as the foam is mechanically pressed or squeezed to remove the oil.

In various embodiments, the surface chemistry of the open-cell foam is hydrophobic, oleophilic, and adapted for adsorption of contaminants in water, such as oil or other nonpolar contaminants. In general, oil and water do not mix because water is a polar molecule and hydrocarbons are nonpolar, or only partially polar. To attract oil, sorbents for the recovery of oil are preferably made of nonpolar materials. The intermolecular (van der Waals) forces associated with hydrocarbons, due to electronegativity of the electron distribution and structural symmetry of each molecule, are generally weak compared to forces due to covalent bonds, hydrogen bonds, or electrostatic interaction of ions among other materials. If an ensemble of molecules is of the same chemical species as another, attraction between them may be cohesive. For different molecular species, adhesion is generally stronger the greater the similarity of electronegativity and structural symmetry between the two species. Because, however, van der Waals forces are weak and are effective only over short distances, the surface chemistry of sorbent materials is critically important. Advantageously, the polymer (e.g., EMA) used to define the cells within the foam gives the foam a surface chemistry that is ideal for the recovery of a wide variety of possible nonpolar contaminants.

Hydrocarbon molecules may have variations in their electron distribution or bond angles which form relative charge separation and induce some polar behavior. This is true of hydrocarbon molecules with carbon double bonds, heteroatoms, or some functional groups, either because of their electronegativity or shape. Crude oil is an ensemble of various hydrocarbons, most of which are nonpolar, as described in Table 2.

Table 2. Composition of crude oil.

| Constituent | Chemical Name | Homologous Series | Size / Predominant | % | Reason for Polarity |
|---|---|---|---|---|---|
| Napthenes | cycloalkanes | $C_nH2(n+1-g)$ | methylcyclohexane C7H14 | 50 | nonpolar saturated symmetry |
| Paraffins | alkanes | $C_nH2n+2$ | 5<n<16 | 30 | nonpolar saturated symmetry |
| Aromatics | arenes | $C_nH2n-6$ | | 15 | nonpolar stabilized by resonance (mesomerism) |
| Asphaltenes | impurities | | | 5 | partially polar heteroatoms act as polar functional groups |
| Note: In crude oil, cycloalkanes are predominantly monocyclic (i.e., g = | | | | )• | |

Referring again to FIG. 1, polymerization of ethylene with methyl acrylate produces EMA, which is saturated except for a carbon double bond in methyl acrylate. Once formed into foam, EMA provides a substrate on which crude oil can adsorb. The proportions of ethylene to methyl acrylate are variable and denoted by the ratio of $n$ to $m$ (i.e., $n:m$) where $n$ is an amount of ethylene, and $m$ is an amount of methyl acrylate. In one embodiment, the ratio $n:m$ is tailored to the particular contaminant to be recovered. For example, the ratio $n:m$ may be varied to match the polarity of the particular contaminant. While EMA is substantially nonpolar, the influence of a double bond on molecular polarity decreases as the ratio of $n:m$ is increased. For the open-cell foams described herein, the ratio $n:m$ may be, for example, from about 1:5 to about 5:1, from about 1:2 to about 5:1, or preferably about 4:1. In general, higher values of m (i.e., more methyl acrylate) make the material more flexible.

Crude oil, which is mostly nonpolar (like EMA), tends to have an affinity for EMA. Crude oil may wet a surface of EMA, which is hydrophobic as well as oleophilic. Other hydrocarbons, such as fatty acids, fats, and polycyclic aromatic hydrocarbons are also substantially nonpolar, and may be adsorbed on EMA. This is particularly true of saturated fatty acids (homologous series $C_nH_{(2n+1)}CO_2H$) with long aliphatic chains (i.e., with n ranging from 13 to 17). In general, EMA is substantially nonpolar, which makes EMA desirable for adsorbing a wide variety of contaminants.

The selective affinity of a solid for a liquid may be quantified by measuring a contact angle between the solid and the liquid. In general, the lower the contact angle, the higher the wettability of the liquid on the solid. In one experiment, a copolymer of 80% ethylene and 20% methyl acrylate was observed to have a higher contact angle for water and a lower contact angle for oil than neoprene rubber, a common polymer used in oil removal constructions. Such data indicate that EMA is more hydrophobic and more oleophilic than neoprene rubber. Also, by varying the amount of methyl acrylate in the composition, the contact angle with various fluids may be adjusted. This allows the copolymer be tailored for selective adsorption of specific contaminants.

With respect to buoyancy, the foam materials described herein are configured to remain buoyant, even when saturated with contaminants such as oil. In various embodiments, the polymer (e.g., EMA) used to define the foam has a lower density than water and is therefore intrinsically buoyant. When adsorbed contaminants are denser than water, the presence of at least some closed-cell voids in the foam may provide reserve buoyancy, to prevent the open-cell foam from sinking. In various embodiments, EMA does not sink in water, even when saturated with contaminants.

Mechanically, the foam materials described herein are elastic and resilient, which allows the materials to withstand wave action and be reused after contaminants have been removed. Compared to previous sorbent boom materials, the foams described herein are more durable (e.g., less brittle), allowing the foams to withstand stresses caused by wave or wind action. For example, EMA is intrinsically tough and durable, due at least in part to EMA's high molecular weight and high amorphous content. Additional mechanical strength and durability may be imparted to EMA by crosslinking, for example using a high energy electron beam, an organic peroxide, or Silane technologies. Crosslinking also aids in the foaming process as it adds melt strength during high temperature foaming operations. In one embodiment, the elastic properties of the foam allow oil and other contaminants to be squeezed out of the foam and the foam to be reused multiple times.

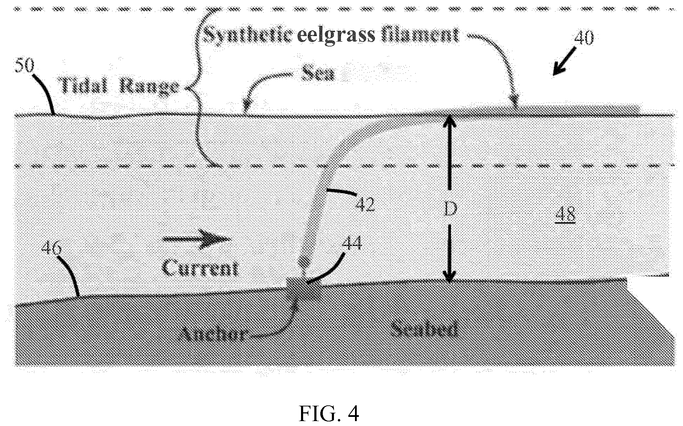

Referring to FIG. 4, in various embodiments, the open-cell foam materials described herein are utilized in an oil recovery apparatus 40 that includes a plurality of strips or filaments 42 attached to an anchor 44. The filaments 42 include or consist essentially of the open-cell foam material. Due to an intrinsic buoyancy of the filaments 42, the filaments 42 extend from the anchor 44, located at a bottom 46 of a body of water 48, to a surface 50 of the body of water 48. The filaments 42 are preferably longer than a depth D of the water column, such that at least a portion of the filaments 42 floats on the surface 50. In this way, the filaments 42 may form a barrier that extends through substantially the entire water column, from the bottom 46 to the surface 50. The apparatus 40 may be used to recover or collect a contaminant (e.g., oil) from beneath the surface 50 and/or floating on the surface 50. Due to its resemblance to naturally occurring eelgrass, the apparatus is referred to herein as synthetic eelgrass. The floating portion of the filaments 42 may be oriented down wind and/or aligned with water currents.

Advantageously, the apparatus may be used to collect or interdict oil and other contaminants being washed ashore or downstream by currents, wind, or wave action. Because the apparatus extends through substantially the entire water column, the contaminants generally cannot evade the apparatus by flowing over or under the filaments. As mentioned, the open-cell structure of the foam provides a large surface area onto which oil can be adsorbed. Further, the oil adsorbed onto the filaments can be readily recovered (e.g., by mechanical action) due to the elastic properties of the foam.

In general, compared to conventional floating booms, the apparatus is better able to withstand stresses associated with wave or wind action and is therefore less prone to mechanical failure. Due to the mechanical properties of the foam, and the structural design and orientation of the filaments, the filaments are able to deform and bend, as needed to achieve a natural or "sea kind" response to wave action, much like naturally occurring eelgrass. Dynamic snap loads as may be induced by wave action, which are a significant source of mechanical failure for conventional booms, tend to be significantly smaller and less destructive of the apparatus, at least in part due to the independent movement of the filaments of foam.

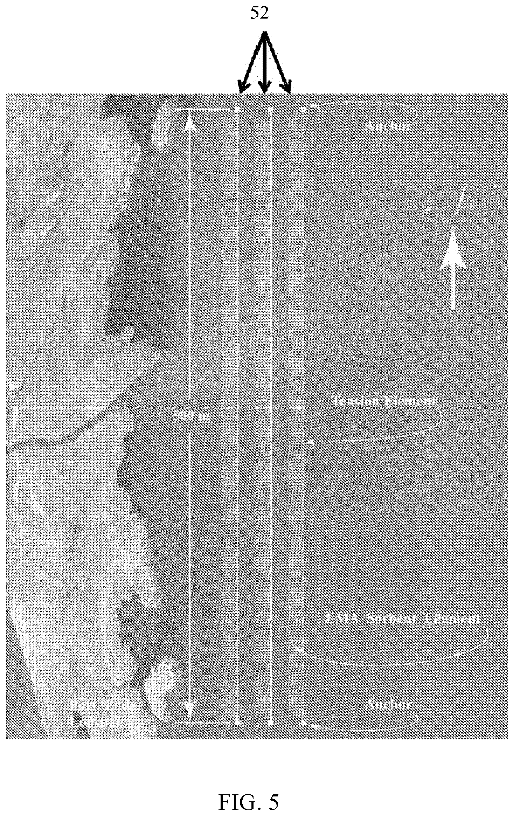

In various embodiments, the apparatus is deployed in shoal waters not far from the shore. Referring to FIG. 5, a hypothetical deployment off a coastline includes three longlines 52 of synthetic eelgrass to create an ensnaring barrier. The longlines 52 may be separated by, for example, a distance from about 1 m to about 10 m, or about 3 m. Separation of the longlines 52 may be dependent on the deployment method and environmental conditions. In some embodiments, the synthetic eelgrass is deployed in deep water by mooring it properly near the surface. For example, the synthetic eelgrass may be deployed to interdict contaminants in the first few meters of the water surface, in water depths that may be 10s or 100s of meters depth. The barrier of rising synthetic eelgrass may be deployed to extend vertically upward over a selected range of water depth. In some embodiments, the synthetic eelgrass does not extend to the seafloor and/or to the water surface. The synthetic eelgrass and foam compositions described herein may be deployed in any water depth and in any subset of the water depth.

The synthetic eelgrass can serve as a rapidly deployable barrier to prevent the inundation of coastal wetlands by oil spilled at sea or in other bodies of water. When multiple lines of the apparatus are deployed offshore (e.g., parallel to each other), a line of filaments that become saturated with adsorbed oil may be removed (e.g., as entire sections or ensembles attached to a tension element) and replaced with clean or unsaturated foam product, without breaching the barrier. The saturated filaments may be cleaned by mechanical action (e.g., squeezing or centrifuging) and redeployed when and where needed. The recovered oil and other contaminants may be burned and/or further processed for subsequent reuse, allowing for at least some recovery of the value of the spilled oil.

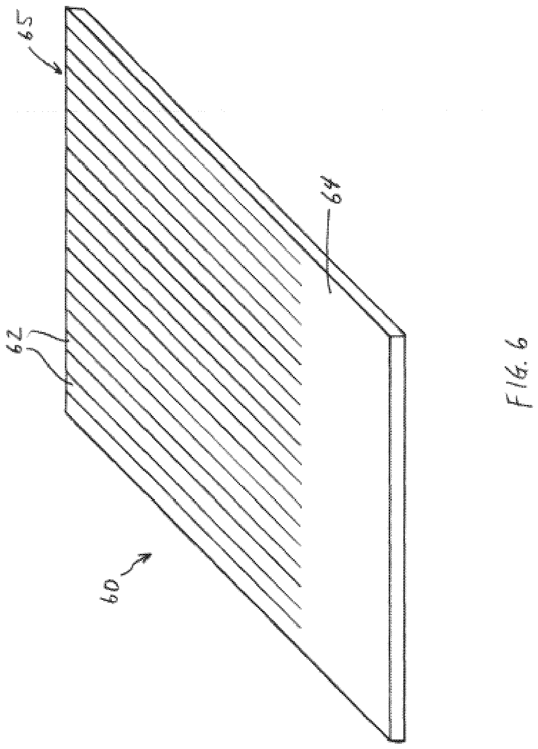

Referring to FIG. 6, in certain embodiments, a method of manufacturing the 20 apparatus includes manufacturing a sheet 60 of the open-cell foam, as described above. For example, the polymer (e.g., EMA) may be mixed with a foaming agent to produce the open cell foam sheet 60. Next, a series of substantially parallel slits 62 is formed in the sheet. The slits 62 originate at a base portion 64 of the sheet 60 and extend to an opposite edge 65 of the sheet 60, thereby defining the filaments 42 (i.e., a plurality of strips attached to the base portion) for the apparatus 40. The slits 62 provide an increased surface area of the strips, and may also enable the strips to respond independently to external forces (e.g., wave forces). With the filaments 42 formed from the sheet 60, the base portion 64 may then be attached to a tension element, using any available technique.

In some embodiments, the sheet 60 has a thickness from about 0.125 inches to about 2 inches, from about 0.25 inches to about 1 inch, or about 0.5 inches. A distance between adjacent slits 62 in the sheet may be, for example, from about 0.5 inches to about 6 inches, from about 1 inch to about 3 inches, or about 2 inches. In general, the thickness of the sheet 60 and the distance between the slits 62 correspond to a thickness and width, respectively, of the filaments 42. A length of the filaments 42 may be, for example, from about 2 feet to about 20 feet, from about 5 feet to about 15 feet, or about 10 feet.

In some embodiments, sheet 60 is a composite that includes both open and closed 5 cell foams. The two types of foams may also include different EMA compositions. The two foams in the sheet 60 may be joined together to provide different material properties in different regions of the sheet. For example, the base portion 64 may consist of a solid or unfoamed EMA, which may be able to better withstand abrasion and/or have greater strength than the foamed EMA, in either open-cell or closed-cell form.

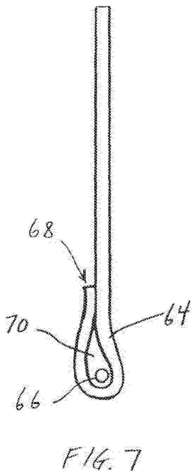

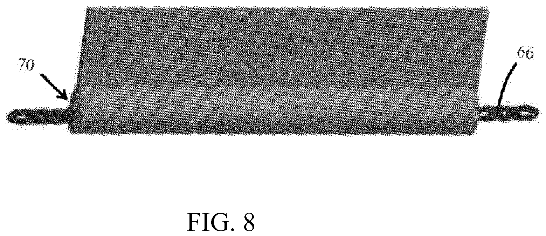

Referring to FIGS. 7 and 8, one preferred technique includes wrapping the base portion 64 around a tension element 66 and bonding a bottom edge 68 of the base portion 64 to a surface of the base portion 64, to form a sleeve 70 for the tension element 66. In alternative embodiments, the filaments 42 are formed as separate strips of foam and secured to the tension element 66 using, for example, mechanical fasteners or adhesives.

The tension element 66 may be any type of line, including a synthetic line, a natural fiber line, a wire rope, and/or a chain, as required. Use of a heavy line, such as a metal chain, may provide extra weight to keep the filaments 42 submerged.

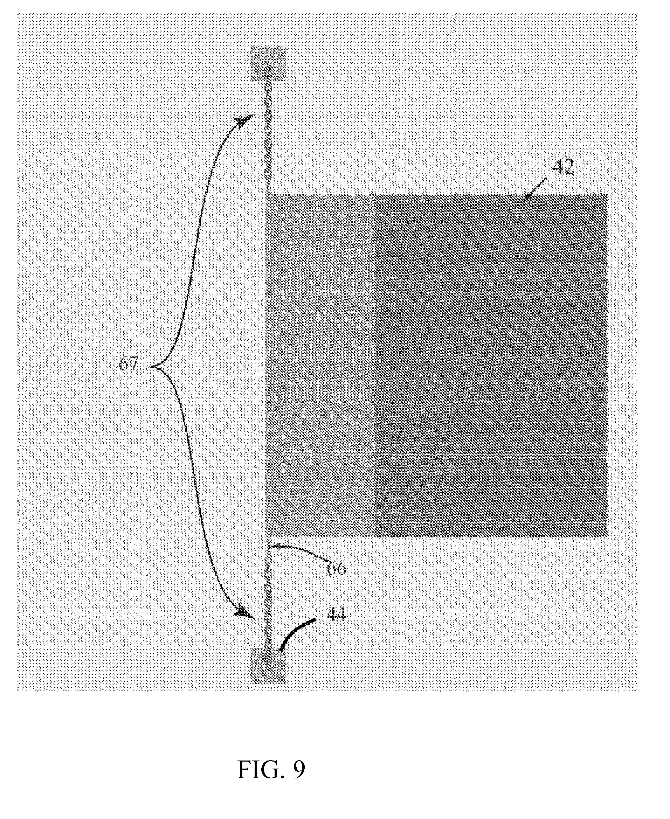

Multiple lengths of the synthetic eelgrass (e.g., foam sheets 60 with the filaments 42) may be attached collinearly, to a single tension element 66 or a series of tension elements 66, to form longer lengths (e.g., longline 52) capable of protecting larger stretches of shoreline, as depicted in FIG. 5. Referring to FIG. 9, the tension element 66 may be tensioned to provide a secure installation. Ends of the tension element 66 may be connected to anchor rodes 67 or other tension elements, for example, to connect adjacent lengths of the synthetic eelgrass. In some embodiments, the tension element 66 serves a comparable purpose to the tension element in demersal longlining used for fishing. In that application, the tension element provides a manageable ensemble of baited fishing lines. The anchor rodes 67, tension elements with a shot of chain, and the anchor 44, may be used to secure the tension elements to the sea floor.

In alternative embodiments, the filaments 42 are formed from polymer that is not foamed. For example, compared to foamed EMA, non-foamed EMA may be better able to withstand abrasion. When not foamed, the EMA may include surface textures or pores to provide increased surface area for adsorption. The pores or textures may be formed, for example, with EMA fibers and/or fabric.

In various embodiments, the composition described herein is formed into one or more strips, which may or may not be continuous. For example, the composition may be in the form of a continuous loop. In some embodiments, the strip is bonded to a carrier having a sheet material, which may include a solid, a foam, and/or a fabric. In this form, a belt of open-cell foam may be used to extract chemicals from a slurry pit, or a pool of mining waste water, by conveying the adsorbed chemicals from the pit or pool to a recovery point, where the chemicals are scraped off of unfoamed EMA or squeezed out of open-cell foam EMA. The belt may be a composite, including or consisting of open-celled foamed EMA laminated to unfoamed EMA. The composite may provide a more durable substrate to which a large surface area, open-cell foam EMA may effectively sequester large amounts of sorbate.

In one example, the composition is formed into a long, continuous strip or skimmer belt that may be used to remove oil or other contaminants from the surface of a body of water. The skimmer belt may be dragged behind or disposed in front of (e.g., as a forward projection) an oil recovery vessel and processed continuously by the vessel. For example, the belt may be hauled in for removal of adsorbed oil and then redeployed into the water. In one embodiment, the belt is advanced around a continuous loop as it is being dragged behind the vessel, with part of the belt in the water to adsorb oil and another part of the belt on the vessel where oil is removed. Removal of the oil may be achieved, for example, by squeezing the belt through opposed rollers.

In some embodiments, the composition is incorporated into a composite structure along with a foam, a fabric, or another polymer, to take advantage of the properties of each. For example, a solid component may add strength to an EMA copolymer foam layer, for applications requiring higher strength than is achievable with foam alone. In one embodiment, the composition is laminated to a rubber belt or fiber belt for use in skimming machinery.

In some embodiments, the composition is incorporated into one or more disks that rotate through contaminated water, about a center axis that is parallel to the surface of the water. A bottom portion of the disks is in contact with the water for oil adsorption. As the disks rotate, oil may be removed from a top portion of the disks by mechanical action (e.g., squeezing).

In certain embodiments, the methods and apparatus described herein are used to detect the presence of contaminants in water or other polar liquid. For example, the foam composition may be deployed in a body of water to adsorb contaminants for a specified amount of time (e.g., one day). The foam composition may then be removed from the body of water and the adsorbed contaminants may be recovered from the foam and analyzed to identify the presence and/or concentration of the contaminants in the water. This approach may be used, for example, to determine the presence of PCBs in the water. In one embodiment, the foam composition is used to sampling long chain hydrocarbons, PCBs, and/or polycyclic aromatic hydrocarbons from the environment.

In various embodiments, the apparatus and foam compositions described herein are used to sequester or collect heavy metals from a body of water or other location. The foam composition may be treated with or contain nonpolar or chelating agents to attract or sequester the heavy metals.

Each numerical value presented herein, for example, in a table, a chart, or a graph, is contemplated to represent a minimum value or a maximum value in a range for a corresponding parameter. Accordingly, when added to the claims, the numerical value provides express support for claiming the range, which may lie above or below the numerical value, in accordance with the teachings herein. Absent inclusion in the claims, each numerical value presented herein is not to be considered limiting in any regard.

The terms and expressions employed herein are used as terms and expressions of description and not of limitation, and there is no intention, in the use of such terms and expressions, of excluding any equivalents of the features shown and described or portions thereof. In addition, having described certain embodiments of the invention, it will be apparent to those of ordinary skill in the art that other embodiments incorporating the concepts disclosed herein may be used without departing from the spirit and scope of the invention. The features and functions of the various embodiments may be arranged in various combinations and permutations, and all are considered to be within the scope of the disclosed invention. Accordingly, the described embodiments are to be considered in all respects as only illustrative and not restrictive. Furthermore, the configurations, materials, and dimensions described herein are intended as illustrative and in no way limiting. Similarly, although physical explanations have been provided for explanatory purposes, there is no intent to be bound by any particular theory or mechanism, or to limit the claims in accordance therewith.

The following clauses describe embodiments of the invention:

Clauses

1. An apparatus for removing a contaminant from a liquid, the apparatus comprising:

a tension element extending along a length of the liquid, proximate a bottom thereof; and
a plurality of buoyant strips attached to the tension element and extending to a surface of the liquid, at least a portion of the strips floating on the surface,
wherein (i) the strips comprise a polymer defining an open cell foam, (ii) the polymer comprises ethylene alkyl acrylate copolymer, and (iii) the foam comprises at least one of: an average cell size greater than 1.4 mm and a ratio of open cells to closed cells greater than 1:1.

2. The apparatus of clause 1, wherein the ethylene alkyl acrylate comprises ethylene methyl acrylate.
3. The apparatus of clause 1, wherein the polymer comprises at least 80% ethylene alkyl acrylate, by weight.
4. The apparatus of clause 1, wherein the foam comprises a tensile strength greater than 14 psi.
5. The apparatus of clause 1, wherein the foam comprises a density greater than 1 lb/ft$^3$.
6. The apparatus of clause 1, wherein the polymer further comprises low density polyethylene.
7. The apparatus of clause 1, wherein the contaminant comprises a petroleum product.
8. The apparatus of clause 1, wherein the contaminant comprises a nonpolar species.
9. A method of removing a contaminant from a liquid, the method comprising the steps of:

placing a tension element along a length of a bottom of the liquid;
attaching a plurality of buoyant strips to the tension element, such that the strips extend to a surface of the liquid with at least a portion of the strips floating on the surface; and

exposing the strips to the contaminant in the liquid,
wherein (i) the strips comprise a polymer defining an open cell foam, (ii) the polymer comprises ethylene alkyl acrylate copolymer, and (iii) the foam comprises at least one of: an average cell size greater than 1.4 mm and a ratio of open cells to closed cells greater than 1:1.

10. The method of clause 9, wherein the ethylene alkyl acrylate comprises ethylene methyl acrylate.
11. The method of clause 9, wherein the polymer comprises at least 80% ethylene alkyl acrylate, by weight.
12. The method of clause 9, wherein the foam comprises a tensile strength greater than 14 psi.
13. The method of clause 9, wherein the foam comprises a density greater than 1 lb/ft$^3$.
14. The method of clause 9, wherein the polymer further comprises low density polyethylene.
15. The method of clause 9, wherein the contaminant comprises a petroleum product.
16. The method of clause 9, wherein the contaminant comprises a nonpolar species.
17. The method of clause 9, further comprising adsorbing the contaminant onto the strips.
18. The method of clause 17, further comprising:

removing the strips from the liquid; and
extracting the contaminant from the strips by mechanical action.

19. The method of clause 18, further comprising redeploying the strips into the liquid for further contaminant removal.

20. A method of manufacturing a contaminant removal apparatus, the method comprising:

mixing a polymer with a foaming agent to produce an open cell foam sheet, the polymer

comprising ethylene alkyl acrylate copolymer;
introducing a plurality of substantially parallel slits in the foam sheet, the slits originating at a base portion of the foam sheet and extending to an opposite edge of the foam sheet to define a plurality of strips attached to the base portion; and
attaching the base portion to a tension element,
wherein the foam comprises at least one of: an average cell size greater than 1.4 mm and a ratio of open cells to closed cells greater than 1:1.

21. The method of clause 20, wherein the ethylene alkyl acrylate comprises ethylene methyl acrylate.

22. The method of clause 20, wherein the polymer comprises at least 80% ethylene alkyl acrylate, by weight.

23. The method of clause 20, wherein the foam comprises a tensile strength greater than 14 psi.

24. The method of clause 20, wherein the foam comprises a density greater than 1 lb/ft$^3$.

25. The method of clause 20, wherein the polymer further comprises low density polyethylene.

26. The method of clause 20, wherein the mixing occurs in an extruder.

27. The method of clause 20, wherein the contaminant comprises a petroleum product.

28. The method of clause 20, wherein the contaminant comprises a nonpolar species.

29. A composition comprising a polymer defining an open cell foam, the polymer comprising ethylene alkyl acrylate copolymer, and the foam comprising at least one of: an average cell size greater than 1.4 mm and a ratio of open cells to closed cells greater than 1:1.

## Claims

1. Composition for removing and/or recovering oil from land or water, comprising a polymer defining an open-cell foam and including ethylene methyl acrylate (EMA) copolymer, the EMA copolymer having a methyl acrylate content from about 3% to about 45% based on the total weight of copolymer, the polymer includes 100% EMA copolymer, and the polymer has a melt index (MI) from about 0.5 g/10 minutes to about 5 g/10 minutes.

2. Composition of claim 1, wherein the open-cell foam has a density from about 16.02 kg/m$^3$ (1 lb/ft$^3$) to about 32.04 kg/m$^3$ (2 lb/ft$^3$).

3. Composition according to any one of the preceding claims, wherein the open-cell foam has an average cell size greater than 1.4 mm.

4. Composition according to any one of the preceding claims, wherein the ratio of open cells to closed cells is greater than 1:1.

5. Composition according to any one of the preceding claims, wherein the EMA copolymer has a methyl acrylate content of from about 15% to about 25%.

6. Composition according to any one of the preceding claims, wherein the composition is formed of buoyant strips or long buoyant filaments (42).

7. Composition according to any one of the preceding claims, wherein the open-cell foam is formed as a foam sheet (60) preferably having a series of preferably substantially parallel slits (62), wherein preferably the slits (62) originate at a base portion (64) of the sheet (60) and extend to an opposite edge (65) of the sheet (60), preferably thereby defining the filaments (42) or strips for the apparatus.

8. Composition according to any one of the preceding claims, the open-cell foam being defined by the composition having a tensile strength greater than 0.965 bar (14 psi), preferably greater than 1.103 bar (16 psi).

9. Apparatus for removing a contaminant from a liquid, the apparatus comprising:

   a plurality of buoyant strips or filaments (42) comprising an open-cell foam, on which a contaminant preferably oil is absorbed,
   the plurality of buoyant strips or filaments (42) configured such that at least a portion of the strips or filaments (42) can float on a surface of the liquid,
   wherein the open-cell foam comprising a copolymer of ethylene alkyl acrylate, preferably of ethylene methyl acrylate (EMA), and the open-cell foam being defined by a polymer of the composition according to claim 1.

10. Apparatus for removing a contaminant from a liquid according to claim 9, wherein the open cell foam comprises at least one of an average cell size greater than 1.4 mm and/or a ratio of open cells to closed cells greater than 1:1.

11. Apparatus for removing a contaminant from a liquid according to claim 9 or 10, wherein the open-cell foam comprises a composition according to any one of the preceding claims.

12. Apparatus for removing a contaminant from a liquid according to any one of claims 9 to 11, wherein the apparatus comprises a tension element to which the buoyant strips or filaments (42) are attachable, wherein the tension element is able to be anchored at both ends.

13. Method of removing a contaminant from a liquid, the method comprising the following steps of:

   - placing a tension element along a length of a bottom of the liquid;
   - attaching a plurality of buoyant strips or filaments (42) to the tension element, such that the strips or filaments (42) extend to a surface of the liquid with at least a portion of the strips or filaments (42) floating on the surface;
   - exposing the strips or filaments (42) to the contaminant in the liquid,

   wherein

   - the strips or filaments (42) comprise a composition comprising a polymer defining an open-cell foam, and
   - the polymer comprises ethylene methyl acrylate (EMA) copolymer, and

   wherein the strips or filaments (42) preferably comprise a composition according to any one of the claims 1 to claim 8.

14. Method of removing a contaminant from a liquid, according to claim 13, wherein the strips or filaments (42) are formed from a sheet (60) produced by slits (62) in the sheet (60) wherein the slits (62) extend from a base portion (64) of the sheet (60) to an opposite edge (65) of the sheet (60) and wherein the base portion (64) of the sheet (60) is attached to the tension element.

FIG. 1

Polymer and
Additives

10

Mix Ingredients — 12

Press Mixture to Form
Preformed Blend — 14

Load Blend into First
Stage Press — 16

Load Blend into Second
Stage Press — 18

Heat and Cool Blend to
Produce Foam — 20

Open Cells with Crushing
and/or Needle Punching — 22

FIG. 2

FIG. 3

FIG. 4

52

FIG. 5

FIG. 6

68

70

64

66

FIG. 7

FIG. 8

FIG. 9

Europäisches
Patentamt

European
Patent Office

Office européen
des brevets

## EUROPEAN SEARCH REPORT

Application Number

EP 17 19 3276

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2011/287929 A1 (SMITH SCOTT C [US] ET AL) 24 November 2011 (2011-11-24) * abstract; figures 1,8-10; examples 1-3 * * paragraphs [32.33.47], [0055], [0058], [0074], [0075] * ----- | 1-14 | INV. B01D17/02 C02F1/28 C08J9/00 |
| A | US 3 819 514 A (CLAMPITT B ET AL) 25 June 1974 (1974-06-25) * column 3 line 55, claims 1,2, example 6 * ----- | 1-14 | |
| A | US 5 100 924 A (SENUMA AKITAK A [JP] ET AL) 31 March 1992 (1992-03-31) * the whole document * ----- | 1-14 | |

TECHNICAL FIELDS
SEARCHED      (IPC)

B01D
C02F
C08J
E21B

The present search report has been drawn up for all claims

| Place of search | Date of completion of the search | Examiner |
|---|---|---|
| The Hague | 24 January 2018 | Weber, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                    

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 19 3276

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2018

| Patent document cited in search report | | | Publication date | Patent family member(s) | | | Publication date |
|---|---|---|---|---|---|---|---|
| US 2011287929 | A1 | | 24-11-2011 | EP | 2571928 | A1 | 27-03-2013 |
| | | | | US | 2011287929 | A1 | 24-11-2011 |
| | | | | US | 2014371060 | A1 | 18-12-2014 |
| | | | | US | 2016362590 | A1 | 15-12-2016 |
| | | | | US | 2017349798 | A1 | 07-12-2017 |
| | | | | WO | 2011146656 | A1 | 24-11-2011 |
| US 3819514 | A | | 25-06-1974 | BE | 789162 | A | 15-01-1973 |
| | | | | CA | 998622 | A | 19-10-1976 |
| | | | | DE | 2241741 | A1 | 29-03-1973 |
| | | | | FR | 2153358 | A1 | 04-05-1973 |
| | | | | GB | 1368669 | A | 02-10-1974 |
| | | | | IT | 965479 | B | 31-01-1974 |
| | | | | JP | S4875469 | A | 11-10-1973 |
| | | | | NL | 7212880 | A | 27-03-1973 |
| | | | | US | 3819514 | A | 25-06-1974 |
| US 5100924 | A | | 31-03-1992 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61604798 A

- US 88619510 A